# EUROPEAN PATENT SPECIFICATION

(11) **EP 4 298 979 B1**
(45) Date of publication and mention of the grant of the patent: **26.03.2025**
(21) Application number: 23176346.7
(22) Date of filing: 31.05.2023
(51) Int. Cl.: A47L 15/42

(54) **A DISHWASHER COMPRISING A HEAT PUMP**
GESCHIRRSPÜLMASCHINE MIT EINER WÄRMEPUMPE
LAVE-VAISSELLE COMPRENANT UNE POMPE À CHALEUR

(30) Priority: 30.06.2022 TR 202210874
(43) Date of publication of application: 03.01.2024
(73) Proprietor: Arçelik Anonim Sirketi, 34445 Istanbul (TR)
(72) Inventor: POYRAZ, Onur, 34445 Istanbul (TR); AYDINTUG, Cetin, 34445 Istanbul (TR); SEREN, Erdogan Mert, 34445 Istanbul (TR)

(56) References cited:
- EP-A2- 3 114 978
- WO-A2-2019/132818
- DE-A1- 102017 215 584
- US-A1- 2020 288 941

## Description

The present invention relates to a dishwasher comprising a heat pump.

In dishwashers, heat pumps are used for decreasing the energy consumption and improve the drying performance. In heat pump dishwashers, the heat pump is composed of the compressor, the condenser, the throttle valve and the evaporator. The components of the heat pump are connected via a pipe line and the heat pump operates by means of the cycle fluid in the line. The condenser is a tube bundle having a hot surface and enables the water to be heated by being positioned in the washing liquid of the dishwasher. The evaporator has a cold surface and is positioned so as to contact the ambient air. The evaporator absorbs heat from the environment and provides the heat transfer to the compressor and the condenser. In this type of heat pump systems, for heating the water, the compressor is operated to enable the condenser to heat the water, and the evaporator is enabled to absorb heat from the environment to support the condenser which heats the water. The compressor pressurize and sends the cycle fluid to the condenser. The cycle fluid passes through the condenser and reaches the evaporator. After the evaporator, the cycle fluid returns to the compressor. By sending the fluid received by the compressor to the condenser again, the cycle is completed. The water heated by the condenser is transmitted to the multiport valve. According to the algorithm-dependent position of the multiport valve, the water is transmitted to the relevant spray arm through a water line to be sprayed into the dishwasher. In the related discharge step, the water is discharged from the sump by means of the discharge pump. The condenser is disposed in a condenser chamber. The condenser chamber is connected to the sump at one end and to the multiport valve at the other end by means of rubber pipes. Water transmission is performed through the rubber pipes. However, heat loss occurs as the heated water moves through the rubber pipes. Moreover, space restrains may occur due to the space occupied by the heat pump disposed in a limited area under the dishwasher.

In the state of the art German Patent Application Document No. DE102017215584, a dishwasher is disclosed, wherein the condenser is disposed in the sump

In the state of the art European Patent Application Document No. EP 3 114 978 A, a dishwasher is disclosed with a heat exchanger and a multiport valve.

The aim of the present invention is the realization of a dishwasher comprising a heat pump with increased efficiency.

The dishwasher realized in order to attain the aim of the present invention, explicated in the first claim and the respective dependent claims thereof, comprises a body; a washing tub which is disposed in the body and wherein the items to be washed are placed; and a heat pump which is disposed between the washing tub and the body. The heat pump comprises a first heat exchanger which absorbs heat from the environment so as to enable the water used in the washing step to be heated; a second heat exchanger which transfers the heat received from the first heat exchanger to the washing tub; and a compressor which performs the refrigerant cycle between the first heat exchanger and the second heat exchanger.

The dishwasher of the present invention comprises the heat pump wherein the second heat exchanger is disposed on the multiport valve. Thus, the water is prevented from losing heat while passing over the second heat exchanger, thus saving space.

In an embodiment of the present invention, the dishwasher comprises an inlet opening and an outlet opening which are provided on the multiport valve. By means of the inlet opening and the outlet opening, the second heat exchanger is enabled to enter and leave the multiport valve.

In an embodiment of the present invention, the dishwasher comprises at least one sealing member which is provided on the inlet opening and the outlet opening. By means of the sealing member, both thermal insulation and liquid leakproofing are provided.

In an embodiment of the present invention, the dishwasher comprises a movement member which is provided in the vertical plane at the center thereof; a shutter which is connected to the movement member; the multiport valve which is provided on the shutter and which has a plurality of openings opening to different spraying members; and the second heat exchanger which is disposed by being wrapped around the movement member. By means of the the movement member on the multiport valve and the shutter which move together, the water is enabled to be transmitted to the determined spraying member. The second heat exchanger is wrapped on the movement member in the vertical plane, parallel to the walls of the multiport valve. Thus, the second heat exchanger is enabled to occupy the least space on the heat pump.

In an embodiment of the present invention, the dishwasher comprises a sump which is provided under the washing tub, and an additional water line and a control valve disposed between the sump and the multiport valve. Thus, the water accumulated on the multiport valve is enabled to be transmitted to the sump through the control valve.

In an embodiment of the present invention, the dishwasher comprises an additional discharge line which opens to the base of the multiport valve and an additional discharge valve. Thus, the water accumulated on the multiport valve is enabled to be discharged by means of the additional discharge valve.

By means of the present invention, a dishwasher is realized, comprising a heat pump with increased operational performance and decreased size.

A dishwasher realized in order to attain the aim of the present invention is illustrated in the attached figures, where:

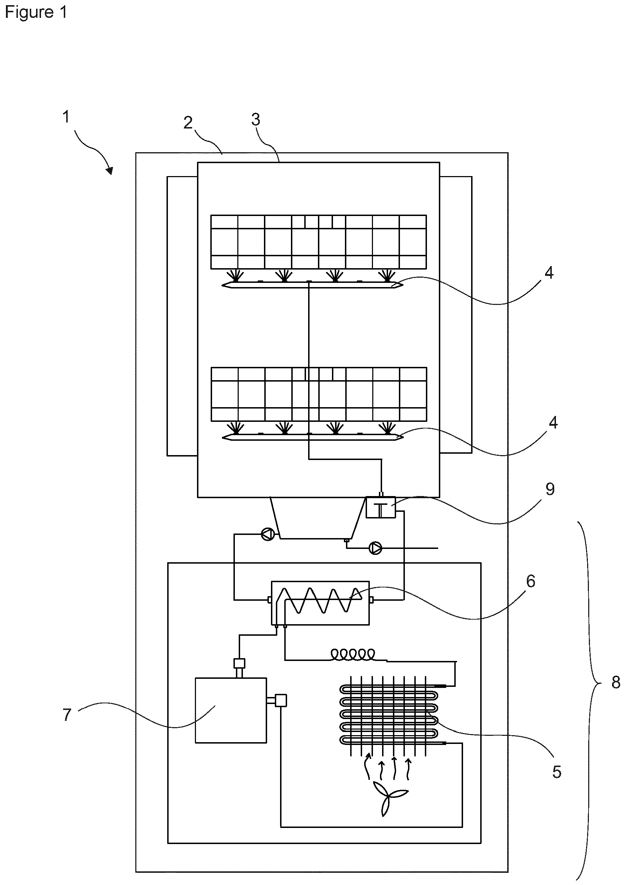

Figure 1 - is the schematic view of a dishwasher comprising a heat pump (prior art).

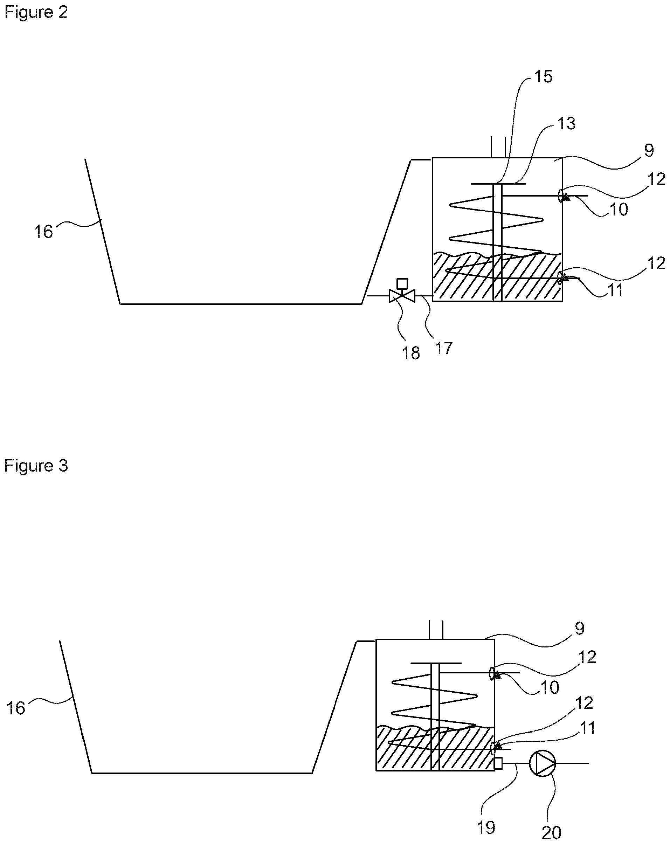

Figure 2 - is the schematic view of the second heat exchanger, the sump and the multiport valve.
Figure 3 - is the schematic view of the second heat exchanger, the sump, the multiport valve and the additional discharge line.

The elements illustrated in the figures are numbered as follows:
1- Dishwasher
2- Body
3- Washing tub
4- Spraying member
5- First heat exchanger
6- Second heat exchanger
7- Compressor
8- Heat pump
9- Multiport valve
10- Inlet opening
11- Outlet opening
12- Sealing member
13- Movement member
14- Shutter
15- Opening
16- Sump
17- Additional water channel
18- Control valve
19- Additional discharge line
20- Additional discharge valve

The dishwasher (1) comprises a body (2); a washing tub (3) which is disposed in the body (2) and wherein the washing process is performed; at least one spraying member (4) which sprays water onto the kitchen items placed into the washing tub (3); a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle; and a multiport valve (9) which enables the heated water to be transmitted to the spraying members (4). By means of the heat pump (8), the air in the washing tub (3) is dehumidified and sent back into the washing tub (3). Thus, the water droplets remaining on the kitchen items in the washing tub (3) after the washing process can be removed more quickly, thereby improving the drying performance

The dishwasher (1) of the present invention comprises the heat pump (8) wherein the second heat exchanger (6) is disposed on the multiport valve (9). The second heat exchanger (6) is disposed on the multiport valve (9). Thus, the heated water is transmitted to the spraying member (4) by means of the multiport valve (9). The heat loss occurring during the transmission of water is minimized. Moreover, the heat pump (8) is enabled to be disposed in the dishwasher (1) more easily.

In an embodiment of the present invention, the dishwasher (1) comprises an inlet opening (10) and an outlet opening (11) which are provided on the multiport valve (9) and through which the second heat exchanger (6) passes. The pipes of the second heat exchanger (6) pass through the inlet and outlet openings (10 and 11). Thus, the second heat exchanger (6) is enabled to be easily placed.

In an embodiment of the present invention, the dishwasher (1) comprises the multiport valve (9) having at least one sealing member (12) which is provided on the inlet opening (10) and the outlet opening (11). By means of the sealing members (12), thermal insulation and leakproofing are provided. Thus, the water is prevented from being transmitted uncontrollably, providing thermal efficiency.

In an embodiment of the present invention, the dishwasher (1) comprises a movement member (13) which is provided in the vertical plane at the center thereof; a shutter (14) which is connected to the movement member (13); the multiport valve (9) which is provided on the shutter (14) and which has a plurality of openings (15) opening to different spraying members (4); and the heat pump (8) having the second heat exchanger (6) which is disposed by being wrapped around the movement member (13). By means of the the movement member (13) on the multiport valve (9) and the shutter (14) which move together, the water is enabled to be transmitted to the determined spraying member (4). The second heat exchanger (6) is wrapped on the movement member (13) in the vertical plane, parallel to the walls of the multiport valve (9). Thus, the second heat exchanger (6) is enabled to occupy the least space on the heat pump (8).

In an embodiment of the present invention, the dishwasher (1) comprises a sump (16) which is disposed under the washing tub (3) and wherein the water flowing down from the washing tub (3) is collected; an additional water line (17) with one end opening into the base of the multiport valve (9) and the other end opening into the sump (16); and a control valve (18) which is disposed on the additional water line (17). In order to facilitate the placement of the second heat exchanger (6) on the multiport valve (9), multiport valves (9) of various sizes can be used. The additional water line (17) opens to the base of the multiport valve (9) so as to discharge the water which is collected at the base and which cannot be transmitted to the spraying member (4). By means of the additional water line (17), the water collected in the multiport valve (9) is transmitted into the sump (16) by means of the control valve (18). Thus, hygiene is provided on the multiport valve (9).

In an embodiment of the present invention, the dishwasher (1) comprises an additional discharge line (19) and an additional discharge valve (20) which enable the discharge of the water collected in the multiport valve (9). The water collected in the multiport valve (9) is discharged from the multiport valve (9) by means of the additional discharge line (19) and the additional discharge valve (20). Thus, hygiene is provided on the multiport valve (9).

By means of the present invention, a dishwasher (1) is realized, comprising a heat pump (8) with decreased size and increased thermal efficiency. By means of the second heat exchanger (6) disposed on the multiport valve (9), thermal losses on the water are prevented and the volume occupied by the heat pump (8) is decreased.

## Claims

1. A dishwasher (1) **comprising** a body (2); a washing tub (3) which is disposed in the body (2) and wherein the washing process is performed; at least one spraying member (4) which sprays water onto the kitchen items placed into the washing tub (3); a heat pump (8) which is arranged under the washing tub (3) and which has a first heat exchanger (5) enabling the water to be used in the washing step to be heated by drawing heat from the environment, a second heat exchanger (6) transferring the heat received from the first heat exchanger (5) to the washing water and a compressor (7) fluidly connected to the first heat exchanger (5) and the second heat exchanger (6) so as to realize the refrigerant cycle; and a multiport valve (9) which enables the heated water to be transmitted to the spraying members (4), **characterized by** the heat pump (8) wherein the second heat exchanger (6) is disposed on the multiport valve (9).

2. A dishwasher (1) as in Claim 1, **characterized by** comprising an inlet opening (10) and an outlet opening (11) which are provided on the multiport valve (9) and through which the second heat exchanger (6) passes.

3. A dishwasher (1) as in Claim 2, **characterized by** the multiport valve (9) having at least one sealing member (12) which is provided on the inlet opening (10) and the outlet opening (11).

4. A dishwasher (1) as in any one of the above claims, **characterized by** comprising a movement member (13) which is provided in the vertical plane at the center thereof; a shutter (14) which is connected to the movement member (13); the multiport valve (9) which is provided on the shutter (14) and which has a plurality of openings (15) opening to different spraying members (4); and the heat pump (8) having the second heat exchanger (6) which is disposed by being wrapped around the movement member (13).

5. A dishwasher (1) as in any one of the above claims, **characterized by** comprising a sump (16) which is disposed under the washing tub (3) and wherein the water flowing down from the washing tub (3) is collected; an additional water line (17) with one end opening into the base of the multiport valve (9) and the other end opening into the sump (16); and a control valve (18) which is disposed on the additional water line (17).

6. A dishwasher (1) as in any one of Claims 1 to 4, **characterized by** comprising an additional discharge line (19) and an additional discharge valve (20) which enable the discharge of the water collected in the multiport valve (9).

## Patentansprüche

1. Eine Geschirrspülmaschine (1) umfasst einen Körper (2); eine Waschwanne (3), die in dem Körper (2) angeordnet ist und in der der Waschvorgang durchgeführt wird; mindestens ein Sprühelement (4), das Wasser auf die in die Waschwanne (3) eingebrachten Küchengegenstände spritzt; eine Wärmepumpe (8), die unter dem Waschbottich (3) angeordnet ist und die einen ersten Wärmetauscher (5), der es ermöglicht, das im Waschschritt zu verwendende Wasser durch Entzug von Wärme aus der Umgebung zu erwärmen, einen zweiten Wärmetauscher (6), der die vom ersten Wärmetauscher (5) erhaltene Wärme auf das Waschwasser überträgt, und einen Kompressor (7), der mit dem ersten Wärmetauscher (5) und dem zweiten Wärmetauscher (6) strömungsmäßig verbunden ist, um den Kältemittelkreislauf zu realisieren, aufweist und ein Mehrwegeventil (9), das es ermöglicht, das erwärmte Wasser zu den Sprühelementen (4) zu übertragen, **gekennzeichnet ist sie dadurch,** dass die Wärmepumpe (8), bei der der zweite Wärmetauscher (6) auf dem Mehrwegeventil (9) angeordnet ist.

2. Eine Geschirrspülmaschine (1) wie in Anspruch 1 aufgeführt, **ist dadurch gekennzeichnet, dass** sie eine Einlassöffnung (10) und eine Auslassöffnung (11) aufweist, die an dem Mehrwegeventil (9) vorgesehen sind und durch die der zweite Wärmetauscher (6) hindurchgeht.

3. Eine Geschirrspülmaschine (1) wie in Anspruch 2 aufgeführt, **ist dadurch gekennzeichnet, dass** das Mehrwegeventil (9) mindestens ein Dichtelement (12) aufweist, das an der Einlassöffnung (10) und der Auslassöffnung (11) vorgesehen ist.

4. Eine Geschirrspülmaschine (1) wie in einem der vorherigen Ansprüche aufgeführt, **ist dadurch gekennzeichnet, dass** sie ein Bewegungselement (13) umfasst, das in der vertikalen Ebene in der Mitte desselben vorgesehen ist; einen Verschluss (14), der mit dem Bewegungselement (13) verbunden ist; das Mehrwegeventil (9), das auf dem Verschluss (14) vorgesehen ist und das eine Vielzahl von Öffnungen (15) aufweist, die sich zu verschiedenen Sprühelementen (4) öffnen; und die Wärmepumpe (8), die den zweiten Wärmetauscher (6) aufweist, der angeordnet ist, indem er um das Bewegungselement (13) gewickelt ist.

5. Eine Geschirrspülmaschine (1) wie in einem der vorherigen Ansprüche aufgeführt, **ist dadurch gekennzeichnet, dass** sie einen Sumpf (16), der unter der Waschwanne (3) angeordnet ist und in dem das von der Waschwanne (3) herabfließende Wasser gesammelt wird; eine zusätzliche Wasserleitung (17), deren eines Ende in die Basis des Mehrwegeventils (9) und deren anderes Ende in den Sumpf (16) mündet; und ein Steuerventil (18), das an der zusätzlichen Wasserleitung (17) angeordnet ist, umfasst.

6. Eine Geschirrspülmaschine (1) wie in einem der Ansprüche 1 bis 4 aufgeführt, **ist dadurch gekennzeichnet, dass** er eine zusätzliche Abflussleitung (19) und ein zusätzliches Abflussventil (20) aufweist, die den Abfluss des im Mehrwegeventil (9) gesammelten Wassers ermöglichen.

## Revendications

1. Un lave-vaisselle (1) **comprenant** un corps (2) ; une cuve de lavage (3) qui est disposée dans le corps (2) et dans laquelle le processus de lavage est effectué ; au moins un élément de pulvérisation (4) qui pulvérise de l'eau sur les articles de cuisine placés dans la cuve de lavage (3) ; une pompe à chaleur (8) qui est disposée sous la cuve de lavage (3) et qui possède un premier échangeur thermique (5) permettant de chauffer l'eau utilisée dans l'étape de lavage en puisant de la chaleur de l'environnement, un second échangeur thermique (6) transférant la chaleur reçue du premier échangeur thermique (5) à l'eau de lavage et un compresseur (7) relié de manière fluide au premier échangeur thermique (5) et au second échangeur thermique (6) de manière à réaliser le cycle réfrigérant ; et une vanne multivoie (9) qui permet de transmettre l'eau chauffée aux éléments de pulvérisation (4), **caractérisé par** la pompe à chaleur (8) dans laquelle le second échangeur thermique (6) est disposé sur la vanne multivoie (9).

2. Un lave-vaisselle (1) selon la Revendication 1, **caractérisé par** la présence d'une ouverture d'entrée (10) et d'une ouverture de sortie (11) qui sont situées sur la vanne multivoie (9) et par lesquelles le second échangeur thermique (6) passe.

3. Un lave-vaisselle (1) selon la Revendication 2, **caractérisé par** la vanne multivoie (9) comportant au moins un élément d'étanchéité (12) qui est prévu sur l'ouverture d'entrée (10) et l'ouverture de sortie (11).

4. Un lave-vaisselle (1) selon l'une quelconque des revendications précédentes, **caractérisé par** la présence d'un élément de mouvement (13) qui est disposé dans le plan vertical au centre de celui-ci; un obturateur (14) qui est relié à l'élément de mouvement (13) ; la vanne multivoie (9) qui est prévue sur l'obturateur (14) et qui comporte une pluralité d'ouvertures (15) débouchant sur différents éléments de pulvérisation (4) ; et la pompe à chaleur (8) qui comporte le second échangeur thermique (6) qui est disposé en étant enroulé autour de l'élément de mouvement (13).

5. Un lave-vaisselle (1) selon l'une quelconque des revendications précédentes, **caractérisé par** la présence d'un réservoir de fond (16) qui est disposé sous la cuve de lavage (3) et dans lequel l'eau qui s'écoule de la cuve de lavage (3) est recueillie ; une ligne d'eau supplémentaire (17) avec une extrémité s'ouvrant dans la base de la vanne multivoie (9) et l'autre extrémité s'ouvrant dans le réservoir de fond (16) ; et une vanne de régulation (18) qui est disposée sur la ligne d'eau supplémentaire (17).

6. Un lave-vaisselle (1) selon l'une quelconque des Revendications 1 à 4, **caractérisé par** la présence d'une ligne d'évacuation supplémentaire (19) et une vanne d'évacuation supplémentaire (20) qui permettent l'évacuation de l'eau collectée dans la vanne multivoie (9).
